(19) Europäisches Patentamt
European Patent Office
Office européen des brevets

(11) Numéro de publication: **0 128 057**
**A1**

# (12) DEMANDE DE BREVET EUROPEEN

(21) Numéro de dépôt: 84400807.8

(22) Date de dépôt: 20.04.84

(51) Int. Cl.³: G 21 C 19/30
C 22 B 26/10, C 22 B 9/02
C 22 B 3/00

(30) Priorité: 28.04.83 FR 8307024

(43) Date de publication de la demande:
12.12.84 Bulletin 84/50

(84) Etats contractants désignés:
DE FR GB NL

(71) Demandeur: ECOLE NATIONALE SUPERIEURE DE CHIMIE DE MULHOUSE
3, rue Alfred Werner
F-68093 Mulhouse(FR)

(72) Inventeur: Hatterer, Camille André
20, rue Charles Gounod
F-68400 Riedisheim(FR)

(72) Inventeur: Walter, Serge
11, rue Eugène Delacroix
F-68200 Mulhouse(FR)

(74) Mandataire: Casanova, André et al,
CABINET ARMENGAUD JEUNE CASANOVA et LEPEUDRY 23 boulevard de Strasbourg
F-75010 Paris(FR)

## (54) Procédé de purification d'un mélange par obtention de deux phases d'état physique distinct et extraction préférentielle des impuretés.

(57) La présente invention concerne un procédé de purification d'un mélange binaire ou multiple composé essentiellement de 2 constituants A et B, A étant le corps à purifier et B étant l'impureté principale non miscible ou pratiquement non miscible à A, ledit mélange présentant pour un intervalle de température connu, un domaine diphasé comportant une première phase formée du corps A pratiquement pur et une deuxième phase formée d'un mélange monophasé de A et B enrichi en B par rapport au mélange de départ ou formé de B pratiquement pur, ces 2 phases étant dans un état physique différent, ledit procédé étant caractérisé en ce qu'il comporte les 2 étapes suivantes:

1) on porte le mélange dans ledit intervalle de température;

2) on extrait les impuretés en utilisant au moins un solvant des impuretés et/ou du mélange monophasé A et B enrichi en B.

Application du procédé à l'épuration de sodium contenant des traces de césium, de lithium ou de potassium.

Fig.1

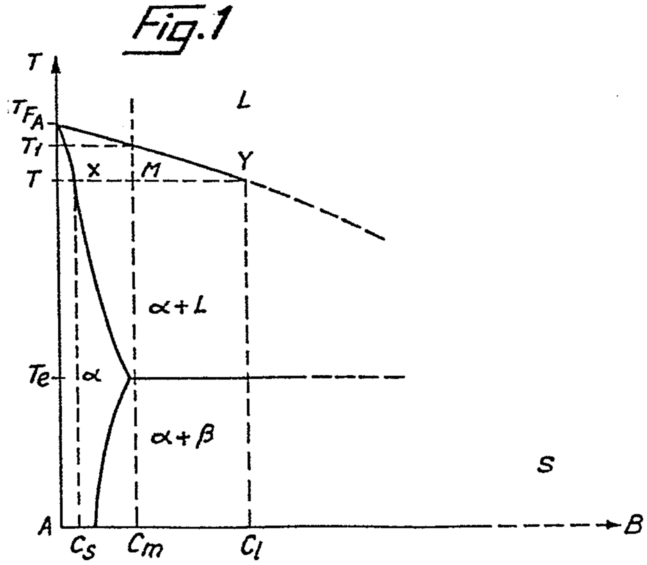


EP 0 128 057 A1

La présente invention concerne un procédé de purification d'un mélange par obtention de 2 phases d'état physique distinct et extraction préférentielle des impuretés contenues dans l'une des deux phases.

Plus précisément la présente invention concerne un procédé de purification d'un mélange de départ binaire et éventuellement multiple composé essentiellement de 2 corps A et B, A étant le corps à purifier et B étant l'impureté principale non miscible ou pratiquement non miscible à A, ledit mélange présentant un diagramme de phase ayant, pour un intervalle de température connu, un domaine diphasé comportant une première phase formée du corps A pratiquement pur et une deuxième phase formée d'un mélange monophasé de A et B enrichi en B par rapport au mélange de départ ou formé de B pratiquement pur, ces 2 phases étant dans un état physique différent, par exemple la première phase formée du corps A pratiquement pur est solide et le mélange monophasé de A et B est liquide.

De nombreux systèmes binaires présentent un diagramme de phase de ce type, en particulier un diagramme de phase solide-liquide, qui, pour un mélange de départ à très faibles teneurs en B, présente un domaine monophasé constitué par une solution solide $\alpha$ de teneur en B dans A nulle ou quasi nulle et pour des teneurs plus fortes en B et pour un certain intervalle de température, un domaine diphasé comportant une solution solide $\alpha$ coexistant avec une phase liquide qui est un mélange de A et B. Un diagramme de ce type est représenté sur la figure 1 du dessin annexé.

Sur la figure 1 on a représenté la partie d'un diagramme binaire A - B à forte teneur en A comportant, aux températures supérieures à $T_{FA}$, point de fusion de A pur, un domaine liquide monophasé L puis pour les températures inférieures à $T_{FA}$ et les très faibles teneurs en B un domaine très limité monophasé de solution solide $\alpha$ de B dans A puis, pour les températures comprises entre $T_{FA}$ et $T_e$ et des teneurs plus fortes en B, un domaine $\alpha$+L diphasé de liquide L et de solution solide $\alpha$.

Comme on le voit sur la figure 1, le refroidissement d'un liquide de titre massique $C_m$ à température $T_l$ fait apparaître à la température T dans le domaine ($\alpha$ + L) un ensemble de grains solides de composition $C_s$ très pauvres en B (à la limite : corps A pur) noyés dans un liquide de composition $C_l$ enrichi en B. Les masses du solide $m_s$ et du liquide $m_l$ en équilibre à la température T sont liées par les relations $m = m_s + m_l$ et $m_s/m_l = MY/MX$ pour des segments MX et MY mesurables et un mélange initial de masse m connu . Si la composition $C_m$ tend vers A pur, la quantité de liquide $m_l$ obtenue peut être très faible devant la quantité de solide $m_s$. Dans ces conditions, pour des températures comprises entre $T_l$ et $T_e$, le solide cristallisé est susceptible d'emprisonner tout le liquide présent aux joints de grains, essentiellement par capillarité, rétrodiffusion et inclusion.

Il est bien connu que ces phénomènes peuvent rendre difficile une purification de A par fusion zonale et extration de la phase liquide L enrichie en B et qui peut être effectuée par liquidation ou ressuage associés à la centrifugation, à la compression ou à l'extraction par solvant.

La présente invention permet de résoudre ces inconvénients.

Elle concerne en effet un procédé de purification d'un mélange binaire ou multiple composé essentiellement de 2 constituants A et B, A étant le corps à purifier et B étant l'impureté principale non miscible ou pratiquement non miscible à A, ledit mélange présentant pour un intervalle de température connu, un domaine diphasé comportant une première phase formée du corps A pratiquement pur et une deuxième phase formée d'un mélange monophasé de A et B enrichi en B par rapport au mélange de départ ou formé de B pratiquement pur, ces 2 phases étant dans un état physique différent, ledit procédé étant caractérisé en ce qu'il comporte les 2 étapes suivantes :

1) On porte le mélange de départ dans ledit intervalle de température de telle sorte que le mélange monophasé s'enrichisse en impuretés par rapport au mélange de départ en utilisant au moins un moyen choisi parmi un chauffage où un refroidissement contrôlé, l'addition ou mélange d'un adjuvant abaissant le point de fusion, une réaction chimique mettant en oeuvre éventuellement un réactif modifiant la nature des

impuretés et un traitement physico-chimique choisi parmi la thermolyse et l'électrolyse.

2) On extrait les impuretés contenues dans le mélange monophasé A et B enrichi en impuretés en utilisant au moins un solvant extrayant au moins les impuretés contenues dans ledit mélange.

Le solvant utilisé peut extraire uniquement les impuretés B contenues dans le mélange monophasé A et B ; le solvant est alors dénommé solvant sélectif. Le solvant utilisé peut extraire la totalité du mélange monophasé A et B, les 2 constituants A et B étant éventuellement ultérieurement séparés, le solvant est alors dénommé solvant non sélectif. Par solvant on entend non seulement un produit ayant la propriété de dissoudre A et/ou B au sens physico-chimique du terme dans le mélange monophasé A et B, mais également un produit pouvant entraîner A et/ou B du mélange A et B hors du contact de la phase distincte formée de A pratiquement pur.

Suivant la nature et l'état physique du mélange monophasé A et B à traiter le solvant peut être un solvant liquide ou gazeux, sélectif des impuretés ou non sélectif. Par ailleurs la dissolution totale ou partielle du mélange monophasé A et B enrichi en B peut être une dissolution simple ou avec réaction.

Un des cas fréquents est celui pour lequel, dans un intervalle de température connu, coexistent une phase solide comportant le corps A pratiquement exempt de B et une phase liquide formée d'un mélange de A et B enrichi en B par rapport au mélange de départ, lesdites impuretés B n'étant donc pratiquement pas miscibles à A à l'état solide. C'est le cas du diagramme de phase représenté sur la figure 2 du dessin annexé.

Dans ce cas particulier, l'intervalle de température visé à l'étape 1) du procédé selon l'invention correspond à une fusion partielle du mélange de départ qui peut être obtenu par la mise en oeuvre d'au moins un des moyens ci-dessous.

- Montée en température du mélange de départ initialement solide.

- Refroidissement et cristallisation partielle du mélange de départ initialement liquide.

-Maintien du mélange dans ledit domaine connu de température où coexistent une phase solide et une phase liquide.

- Modification de la pression externe susceptible d'engendrer dans le mélange la coexistence d'une phase liquide et d'une phase solide.

- Utilisation de la chaleur de réaction libérée au contact du solvant et du soluté.

- Par formation in situ de la phase liquide par réaction entre des impuretés pouvant être solides et un solvant pouvant être gazeux ou liquide.

Afin de faciliter les échanges chimiques entre solvants et corps A solide à purifier, on frationne de préférence ce dernier en fragments suffisamment petits afin d'augmenter sa surface spécifique et réduire la distance que devra parcourir l'impureté B en phase liquide par diffusion entre les joints de grains solides avant d'être piégée par le solvant.

Le procédé selon l'invention est particulièrement intéressant pour l'épuration de corps pour lesquels la fusion zonale donne des résultats médiocres, en raison de la rétention des impuretés liquides dans les joints de grains par capillarité.

Il permet ainsi d'extraire une impureté liquide des joints de grains, là où la centrifugation ou la compression associées au ressuage ne peuvent être appliqués en raison de la dureté trop faible des corps à épurer qui, sous l'action de contraintes mécaniques même légères, se déforment et emprisonnent des "poches" de liquide (inclusions). C'est par exemple le cas du sodium.

Le procédé selon l'invention est plus rapide et consomme moins d'énergie que les procédés connus tels que distillation fractionnée et fusion de zone en particulier.

Enfin, notamment dans le cas de l'épuration du sodium, la mise en oeuvre du procédé selon l'invention est commode et ne nécessite pas de matériel spécifique et coûteux.

En effet, le procédé selon l'invention est particulièrement intéressant pour les mélanges de départ pour lesquels le mélange A+B présente un faible point de fusion. Ceci est en particulier le cas pour la purification des métaux alcalins, en particulier pour la purification du sodium comportant de très faibles quantités de césium. Ces mélanges se rencontrent en génie nucléaire. En effet, le sodium est utilisé dans les centrales à surgénérateur comme caloporteur et le sodium se trouve contaminé au cours de son utilisation par des traces de césium 137 en particulier pour des teneurs initiales supérieures à 1 µg Cs/g Na, en particulier de l'ordre de 1.000 à 10.000 µg de césium par g de sodium.

Le procédé selon l'invention est particulièrement applicable à la purification de ce sodium et l'on peut obtenir par la mise en oeuvre du procédé selon l'invention un sodium purifié où reste environ 1 µg de Cs par g de Na ou moins.

La figure 3 annexée représente le diagramme de phase Na-Cs. La double abscisse représente les titres % atomiques et massiques en césium et en ordonnée, on a représenté les températures en °C. On remarque que la partie riche en sodium de ce diagramme est identique au diagramme de la figure 2 pour lequel le domaine d'existence d'une solution solide du césium dans le sodium est nul ou quasi nul. Sur la figure 3 on voit que le domaine de coexistence de la phase liquide enrichie en impureté avec le sodium pur s'étend de 98 à -29°C.

Les solvants utilisables sont des solvants des impuretés et/ou de la phase liquide présentant une faible tension de vapeur aux températures d'extraction.

Les solvants préférés sont des liquides organiques en particulier des alcools dilués dans des hydrocarbures ou même simplement des hydrocarbures humides c'est-à-dire contenant des traces d'eau, dit mélange de solvant et de diluant. On utilise de préférence comme solvant-diluant de la ligroïne lourde (essence G) dont le point d'ébullition normal est d'environ 140°C. En combinaison avec ces solvants-diluant on peut utiliser, selon un mode préféré de mise en oeuvre du procédé selon l'invention un alcool à faible tension de vapeur aux températures d'extraction, de préférence le butoxyéthanol (butylcellosolve) dont le point d'ébullition normal est de

171°C. Ce produit réagit avec les métaux alcalins à l'état liquide pour donner le butoxy-éthanolate alcalin correspondant. De façon préférée on sature en sodium l'alcool utilisé dans le mélange de solvant hydrocarbure-alcool de façon à le rendre sélectif vis-à-vis de l'impureté. Ainsi on utilise de préférence comme solvant sélectif un mélange ligroïne-butoxyéthanolate de sodium.

Le mélange de solvant peut être recyclé en utilisant l'une des méthodes suivantes :

- On distille le mélange qui est séparé en la ligroïne et le butoxyéthanolate alcalin.

Le butylcellosolve est récupéré par hydrolyse :

$$BuOEt\ OM + H_2O \rightleftharpoons BuOEt\ OH + MOH$$

- On peut effectuer l'hydrolyse ci-dessus, puis une distillation. Si la teneur en BuOEt OH est faible, cet alcool est entraîné par la ligroïne et ce mélange est directement recyclable.

- On peut effectuer une carbonatation puis une filtration

$$2\ BuO\ Et\ OM + H_2O + CO_2 \rightleftharpoons 2\ BuO\ Et\ OH + M_2\ CO_3$$

Si les réactifs sont ajoutés en quantité stoechiométriques une simple filtration suffit pour régénérer le solvant.

Le procédé selon l'invention peut être mis en oeuvre en continu. La température du solvant à l'intérieur du réacteur contenant les fragments de sodium à purifier est de préférence comprise entre 90 et 96°C, de façon encore plus préféré au voisinage de 93°C.

Dans le cas de la purification du sodium, le procédé selon l'invention peut être mis en oeuvre dans un appareillage représenté schématiquement sur la figure 4 ci-après.

Sur la figure 4, on voit que l'appareillage 1 selon l'invention comporte un réacteur 2 en verre Pyrex (diamètre 20 mm, hauteur 20 mm) comportant à sa base un disque 3 en verre fritté Pyrex. Dans le réacteur 2 se trouve l'échantillon 4 de sodium à traiter.

Le solvant est amené à l'échantillon 4 de métal après avoir traversé le disque fritté 3 répartissant l'écoulement sur toute la surface du réacteur 2.

Le solvant est amené au réacteur 2 par l'intermédiaire d'un vase à niveau constant stabilisant la pression non représenté et situé en amont de la canalisation 5, d'une vanne de réglage de débit 6 (vis pointeau), d'un rotamètre 7 (2 à 50 ml/mm), d'un réchauffeur 8 (tube de verre Pyrex diamètre intérieur 12 mm, longueur 200 mm), garni d'une résistance interne 9 (ruban de nichrome ; largeur 2 mm, longueur 10 m) de 50Ω à 20°C alimentée par un autotransformateur variable 10 (0 à 220 V). La température du réacteur 2 est contrôlée par un thermocouple chromel alumel THERMOCOAX 11. A la surverse du réacteur 4 une canule d'aspiration 12 branchée sur le tube d'évacuation 13 des effluents permet le prélèvement d'une fraction du solvant pour le dosage du sodium et du césium. Ce dosage est effectué à l'aide d'un spectrophotomètre d'absorption atomique VARIAN TECHTRON AA.6.

L'appareillage fonctionne de la façon suivante : on introduit un échantillon 4 quasi sphérique de sodium dopé en césium dans le réacteur. Le débit de solvant est maintenu constant. Lorsque le régime stationnaire est établi, on impose une montée progressive en température. L'évolution des teneurs en césium et en sodium dans les effluents est suivie par absorption atomique pendant 60 mn.

On utilise comme solvant un mélange à 10 % en volume de botoxyéthanol (butylcellosolve) et à 90 % en volume de ligroïne lourde (essence G, point d'ébullition supérieur à 120°C).

L'échantillon de sodium à traiter est du sodium dopé en césium dont le point de fusion est d'environ 98°C, la masse initiale est de 0,7243 g et la teneur initiale en césium est de 8500 µg/g.

Le débit du solvant est de 5,2 ml/mm, la température initiale est de 28°C, la température finale est de 120°C.

Les températures indiquées ci-dessus et par la suite sont, sauf spécification expresse, mesurées pour le solvant. En raison de l'exothermicité de la réaction métal alcalin-solvant, le métal est à une température supérieure de 3 degrés environ à celle du solvant.

La précision sur la mesure des concentrations de césium et de sodium est de l'ordre de 5 %.

La densité du sodium est considérée comme constante et égale à 0,97 par rapport à l'eau.

Les résultats expérimentaux sont rassemblés sur la figure 5 donnant une représentation graphique (en fonction du temps) des différents paramètres pendant la période où l'on impose une montée en température du solvant c'est-à-dire de 35 à 60 mn. On a représenté sur la figure 5 :

- la montée en température (courbe 1) l'ordonnée $Y_1$ indiquant les températures en °C
- la diminution du rayon de l'échantillon de sodium (courbe 2), l'ordonnée $Y_2$ indiquant le rayon en cm
- la teneur en césium du solvant après passage sur le sodium (courbe 3), l'ordonnée $Y_3$ donnant le titre en Cs dans le solvant en µg/ml.
- la teneur en sodium du solvant après passage sur le sodium (courbe 4), l'ordonnée $Y_4$ donnant le titre en Cs dans le sodium en µg/g
- le logarithme de la teneur résiduelle en césium dans le sodium (courbe 5).

Les courbes 1 et 3 résultent de mesures directes.

Les courbes 2 et 4 découlent partiellement de mesures directes, partiellement du calcul en admettant que la cinétique d'attaque du sodium est une fonction exponentielle de la température absolue.

La courbe 5 s'obtient par calcul avec les hypothèses suivantes :

la masse totale initiale de césium dans le sodium est égale à la masse cumulée de césium éliminé à la fin de la mesure ;

la teneur du sodium en césium à l'instant t qui est égale à la masse initiale de césium moins la masse cumulée de césium éliminé au temps t le tout multiplié par l'inverse de la masse restante de l'échantillon de sodium au temps t. Sur la courbe 5 on voit que la teneur en césium du sodium est inférieure à 1,2 µg/g à la fin du traitement.

La courbe 3 montre une élimination maximale de césium vers 91-94°C. La température du métal est alors de 96-97,5°C.

La courbe donnant le rapport de la concentration en impuretés (Cs) dans le solvant sur la concentration en corps à épurer (Na) dans le solvant multiplié par la teneur en impuretés du corps à épurer correspond ainsi à l'efficacité absolue de l'extraction. Si on l'exprime en fonction de la température, comme cela est représenté sur la courbe 1 de la figure 6 annexée, on constate que la valeur maximale apparaît à 93°C et qu'elle est environ 10 fois supérieure aux valeurs à 70 et à 115°C. Cette efficacité absolue est exprimée sur l'ordonnée Y1 en $g./ug^{-1} \times 10^{7}$.

Pour tenir compte des dimensions de l'échantillon, on prend en compte les phénomènes suivants :

- la quantité d'impuretés éliminées par unité de temps est proportionnelle à la surface de contact corps à épurer-solvant ;

- la dissolution progressive dans le solvant du liquide aux joints de grains correspond à un écoulement entre des parois solides sensiblement parallèles devant se rapprocher. Le débit est inversement proportionnel à la longueur du trajet à effectuer avant l'entrée en contact avec le solvant ;

- la répartition des impuretés à l'échelle microscopique est supposée homogène ; par conséquent leur quantité est proportionnelle au volume de l'échantillon.

Il convient alors de diviser l'efficacité d'extraction absolue par la surface spécifique de l'échantillon à épurer ce qui équivaut, à une constante près, à la multiplier par le rayon.

Les résultats donnant l'efficacité d'extration relative à la surface spécifique en fonction de la température sont indiqués et représentés par la courbe 2 de la figure 6. Cette efficacité relative est exprimée sur l'ordonnée Y2 en $cm.g./ug^{-1} \times 10^{8}$.

Le maximum très net apparaît à une température voisine de 92°C (légèrement inférieure à celle du maximum de l'efficacité absolue).

La dispersion des valeurs aux températures de 20 à 30°C (± 50 %) peut être attribuée à l'hétérogénéité (à l'échelle du grain) de l'échantillon, associée à une vitesse

très faible de diffusion de l'impureté vers la surface. Cette interprétation est justifiée par le fait qu'avant la montée en température (minutes 0 à 35, $20° < t < 30°C$) la teneur en césium de l'échantillon reste sensiblement constante en dépit de la cinétique d'attaque beaucoup plus élevée pour Cs que pour Na, le facteur limitant étant la diffusion du solvant vers le métal et non celle de l'impureté vers le solvant.

Le procédé selon l'invention peut également être utilisé pour purifier du sodium comportant de faibles quantités de lithium ou de potassium.

En effet, en soumettant un mélange sodium-impureté métallique B, celle-ci pouvant être outre le césium, le lithium ou le potassium, au procédé selon la présente invention, on obtient des coefficients d'extraction très satisfaisants, comme le montre le tableau ci-dessous. L'extraction a été réalisée à 100°C avec comme solvant un mélange comprenant 5 % en volume de butoxyéthylanol et 95 % en volume de ligroïne lourde PE 120-150°C.

| B | Solvant<br>$c = \frac{B}{Na} \times 10^6$ pondéral | Métal (sodium)<br>$D = \frac{B}{Na} \times 10^6$ pondéral | Coefficient d'extraction<br>c/D |
|---|---|---|---|
| Li | 23 000 | $\leqslant 3$ | $\geqslant 7600$ |
| K | 8600 | 630 | $\simeq 14$ |
| Cs | 328 | 4,0 | $\simeq 80$ |

Le coefficient d'extraction, c/D, est le rapport des concentrations (ppm) de l'impureté métallique B dans le solvant organique et dans le métal (sodium) épuré à l'équilibre.

On notera tout particulièrement que le coefficient d'extraction relatif au lithium est extrêmement intéressant du fait de l'extraction inattendue de ce corps qui, pur, ne se dissout que très lentement dans un tel solvant.

Le procédé selon la présente invention peut également être mis en oeuvre pour purifier des iodures de métaux alcalins, tels que les iodures de sodium et de potassium, contaminés par du mercure présent à l'état de trace.

Dans ces iodures alcalins, le mercure (Hg) se trouverait sous forme de sel : iodure mercurique ($HgI_2$), iodure mercureux ($Hg_2I_2$) ou d'un complexe $Na_2 Hg I_4$ ; $K_2 Hg I_4$. On a déterminé une température de travail T comprise entre la température de fusion du sel complexe (257°C) et celle de l'iodure alcalin (supérieure à 600°C) : afin que l'impureté soit liquide aux joints de grains, une température T de 300°C a été retenue. De ce fait le fluide d'extraction est l'hydrogène ou l'azote.

Pour assurer une température de travail T homogène et un abaissement de la pression partielle de mercure qui favorise la diffusion de l'impureté, la technique du lit fluidisé est préconisée.

L'appareillage de laboratoire utilisé dans ce cas comprend : un four à résistance chauffante en nickel-chrome permettant une montée progressive en température du gaz vecteur jusqu'à la température de travail (300°C) ; un contacteur constitué d'une colonne à double paroi comportant une colonne interne qui est reliée au four et dans laquelle plonge un thermocouple coaxial, un courant d'air chaud dans la double paroi maintenant la température à 300°C ; un réfrigérant surmontant le contacteur et relié à la colonne interne de celui-ci, un filtre en verre fritté étant interposé; et un spectrophotomètre d'absorption atomique VARIAN TECHTRON AA6 pour doser le mersure dans les effluents.

On réalise une solution aqueuse d'iodure de sodium et de potassium à 10 % et une solution étalon comportant 5 ppm de mercure qui est préparée à partir d'une solution mercurielle de nitrate de mercure [$Hg(NO_3)_2$] à 1.000 ppm. Le volume de solution nécessaire pour un dosage à l'aide de l'appareillage décrit ci-dessus est de 1 µl. Le débit d'hydrogène est de 6 litres par minutes.

Avant purification la concentration en mercure dans la solution analysée est de 4,78 ppm. Après purification cette concentration est de 0,38 ppm ce qui conrespond à une élimination de 92 % du mercure.

Ainsi la ségrégation et l'extraction du mercure à 300°C en présence d'hydrogène (ou d'azote) conduisent à une diminution notable de la teneur en mercure dans les iodures alcalins, tels que ceux de sodium et de potassium.

Le procédé selon la présente invention peut être également mis en oeuvre pour des dérivés ortho- et para-nitrochloro-benzène qui ne sont pas miscibles à l'état solide. Dans ce cas le dérivé ortho- constitue l'impureté.

La température de travail qui doit être comprise entre les températures de fusion des dérivés ortho- (35,5°C) et para- (83,5°C), est de 60°C afin que le dérivé ortho-ségrège à l'état liquide aux joints de grains.

Le fluide d'extraction, qui est à la fois caloporteur et vecteur solvant, est l'hydrogène.

Dans un contacteur à double paroi, on introduit le mélange ortho-, para-nitrochloro-benzène ($C_6H_4NO_2Cl$). Ce contacteur est traversé, à débit constant par un courant d'hydrogène à 60°C. Un flacon laveur est disposé à la sortie du contacteur : il contient du benzène qui est un excellent solvant de ces dérivés, ce qui permet de retenir les dérivés ortho- et para- extraits.

Pour contrôler l'efficacité du procédé, le mélange est analysé avant et après passage dans le contacteur par chromatographie en phase gazeuse, de même que le contenu du flacon. Les échantillons analysés sont solubilisés dans du benzène à raison de 1 g pour 50 ml de benzène. Le temps de traitement varie de 30 à 90 minutes. Les compositions en poids pour cent du mélange et du flacon laveur à ces différents moments sont regroupés dans le tableau ci-dessous :

| | Initial | | Après 30 mn | | Après 60 mn | | Après 90 mn | |
|---|---|---|---|---|---|---|---|---|
| | para- | ortho- | para- | ortho- | para- | ortho- | para- | ortho- |
| Mélange | 95 | 5 | 94 | 6 | 96 | 4 | 97 | 3 |
| Flacon laveur | - | - | 66 | 34 | 63 | 37 | 57 | 43 |

D'après le tableau ci-dessus, il apparaît que le dérivé ortho- est entraîné sélectivement et préférentiellement : après 90 minutes, la teneur du mélange initial en ortho-nitrochloro-benzène passe de 5 % à 3 %. En d'autres termes 60 % de ce produit est extrait du mélange initial.

Au lieu de l'hydrogène comme fluide d'extraction, on peut également utiliser l'eau puisque le para-nitrochloro-benzène y est très peu soluble.

D'après ces différents exemples de réalisation, il apparaît que le procédé selon l'invention peut être mis en oeuvre non seulement pour des systèmes métal-métal, mais également pour des composés organiques, le fluide d'extraction étant gazeux ou liquide.

REVENDICATIONS

1.- Procédé de purification d'un mélange binaire ou multiple composé essentiellement de 2 constituants A et B, A étant le corps à purifier et B étant l'impureté principale non miscible ou pratiquement non miscible à A, ledit mélange présentant pour un intervalle de température connu, un domaine diphasé comportant une première phase formée du corps A pratiquement pur et une deuxième phase formée d'un mélange monophasé de A et B enrichi en B par rapport au mélange de départ ou formé de B pratiquement pur, ces 2 phases étant dans un état physique différent, ledit procédé étant caractérisé en ce qu'il comporte les 2 étapes suivantes :

1) on porte le mélange de départ dans ledit intervalle de température de telle sorte que le mélange monophasé s'enrichisse en impuretés par rapport au mélange de départ en utilisant au moins un moyen choisi parmi un chauffage ou un refroidissement contrôlé, l'addition au mélange d'un adjuvant abaissant le point de fusion, une réaction chimique mettant en oeuvre éventuellement un réactif modifiant la nature des impuretés et un traitement physico-chimique choisi parmi la thermolyse et l'électrolyse ;

2) on extrait les impuretés contenues dans le mélange monophasé A et B enrichi en impuretés en utilisant au moins un solvant extrayant au moins les impuretés contenues dans ledit mélange.

2.- Procédé selon la revendication 1, caractérisé en ce que le solvant extrait la totalité ou une partie du mélange monophasé A et B.

3.- Procédé selon la revendication 1, caractérisé en ce que suivant la nature et l'état physique du mélange monophasé A et B à extraire on choisit le solvant parmi un solvant liquide ou gazeux, sélectif ou non sélectif.

4.- Procédé selon la revendication 1, caractérisé en ce que la dissolution des impuretés et/ou du mélange monophasé A et B est une dissolution simple ou avec réaction.

5.- Procédé suivant l'une quelconque des revendications 1 à 4, caractérisé en ce que dans ledit intervalle de température connu, le domaine diphasé comporte une première

phase formée de A solide pratiquement pur et une deuxième phase liquide formée d'un mélange de A et B, ladite étape 1) correspondant à une fusion partielle du mélange de départ.

6.- Procédé selon la revendication 5.- caractérisé en ce que la fusion partielle est obtenue par la mise en oeuvre d'au moins un des moyens ci-dessous :

- montée en température du mélange de départ initiallement solide ;
- refroidissement et cristallisation partielle du mélange de départ initialement liquide ;
- maintien du mélange dans ledit domaine connu de température où coexistent une phase solide et une phase liquide ;
- modification de la pression externe susceptible d'engendrer dans le mélange la coexistence d'une phase liquide et d'une phase solide ;
- utilisation de la chaleur de réaction libérée au contact du solvant et du soluté ;
- par formation in situ de la phase liquide par réaction entre des impuretés pouvant être solides et un solvant pouvant être gazeux ou liquide.

Fig.1

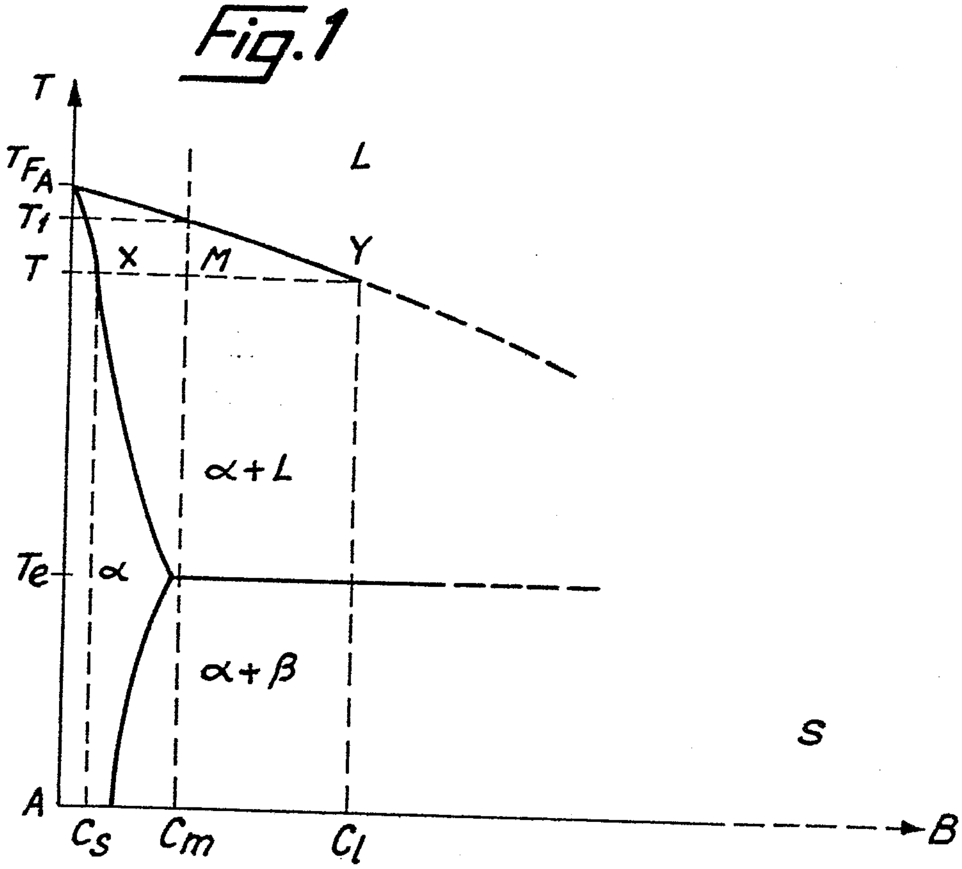


Fig.2

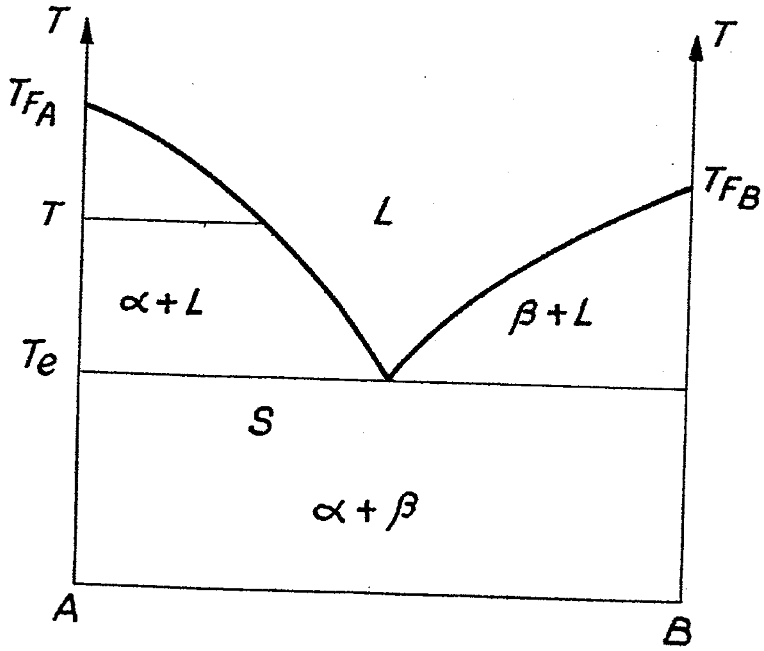

Fig.3

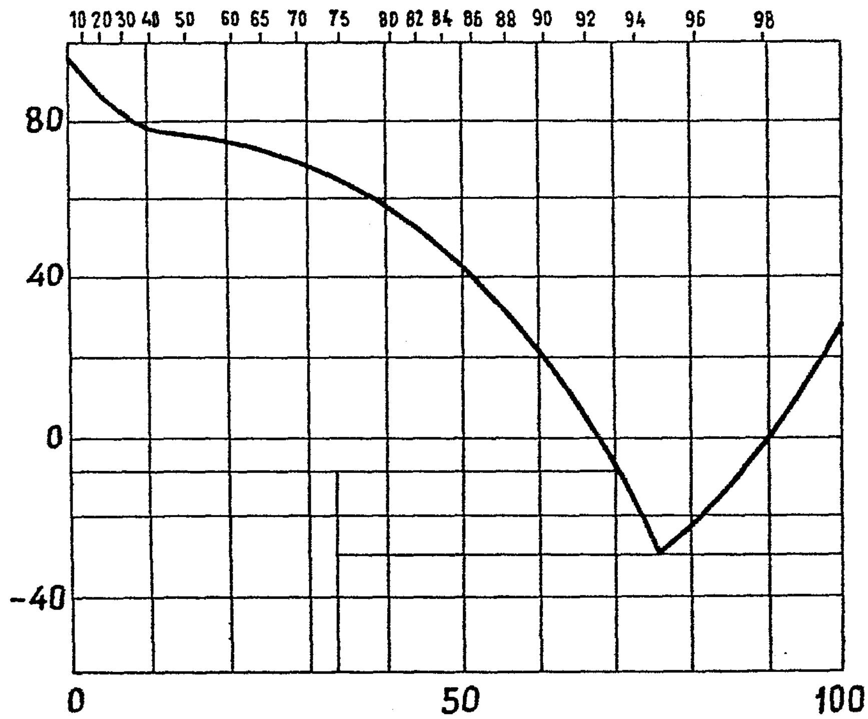
10 20 30 40 50 60 65 70 75 80 82 84 86 88 90 92 94 96 98
80
40
0
-40
0
50
100

Fig.4

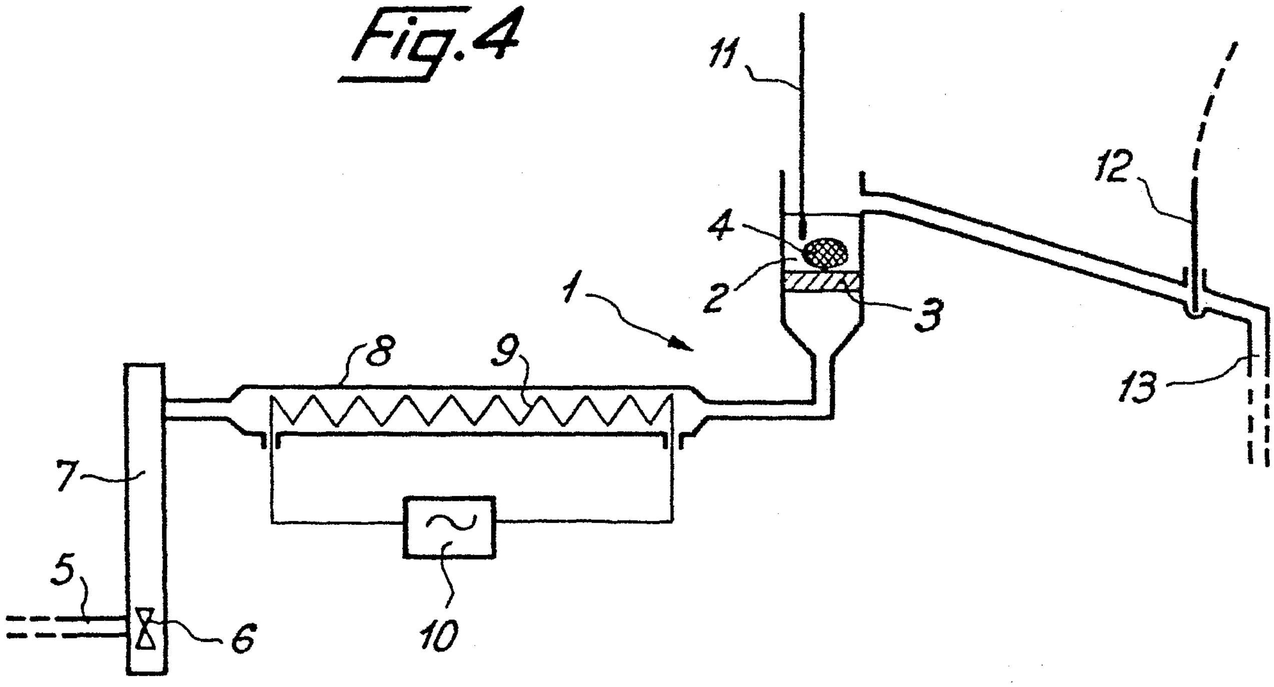
11
4
2
3
12
1
8
9
13
7
5
6
10

Fig. 5

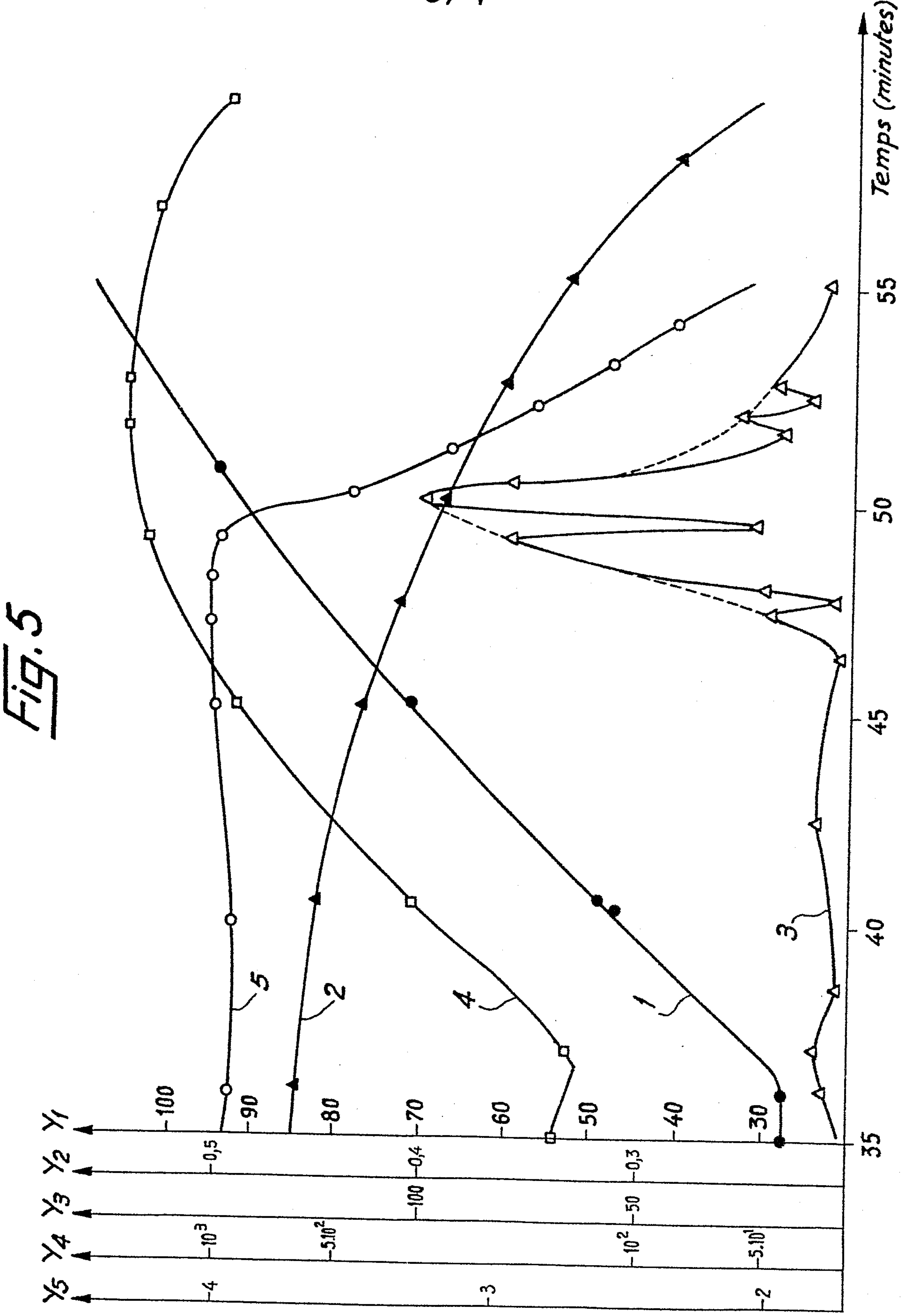
Temps (minutes)
35
40
45
50
55
Y1
Y2
Y3
Y4
Y5
100
90
80
70
60
50
40
30
0,5
0,4
0,3
100
50
10³
5.10²
10²
5.10¹
4
3
2
1
2
3
4
5

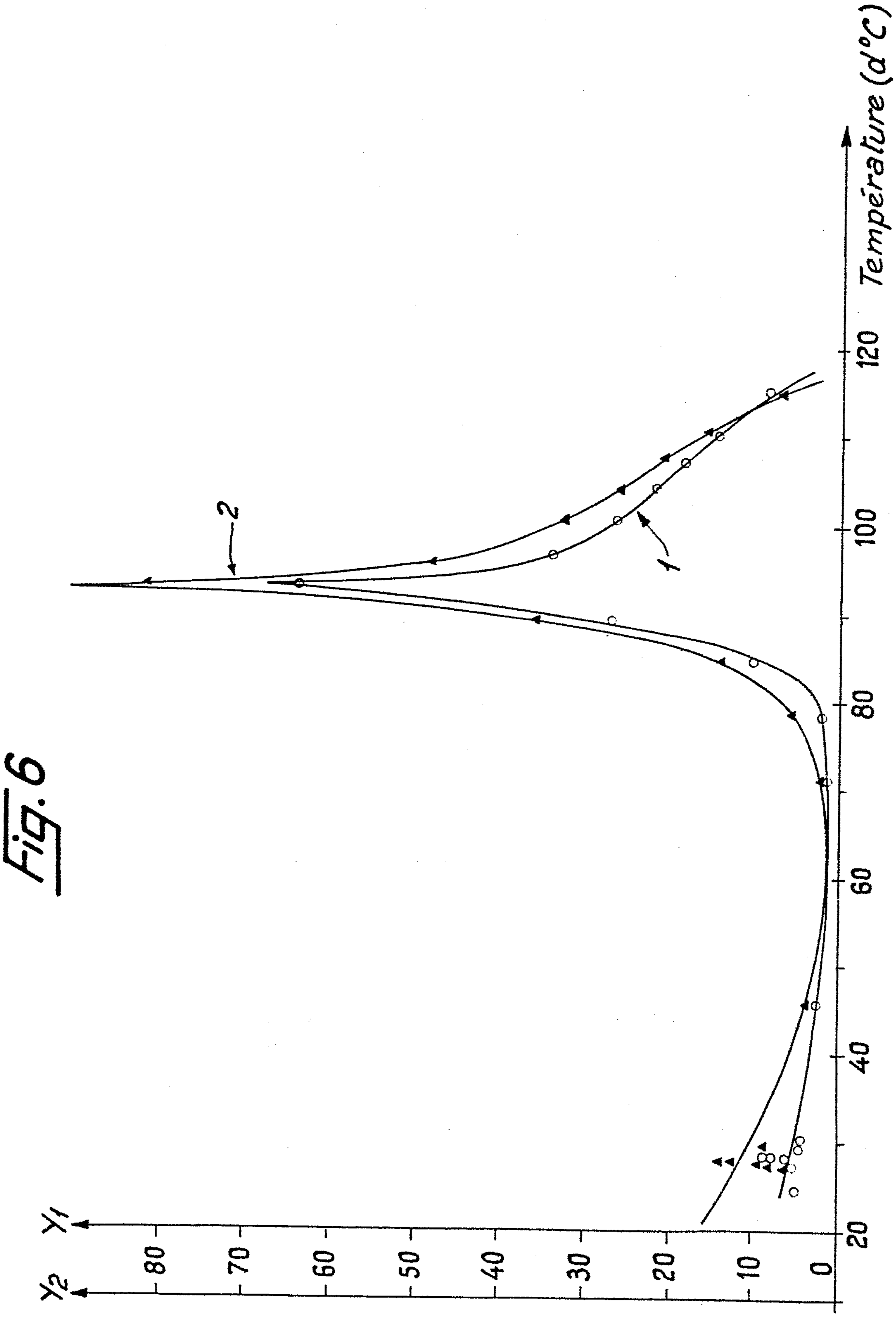
Température (d°C)
20
40
60
80
100
120
Y1
Y2
0
10
20
30
40
50
60
70
80
1
2

Fig. 6

0128057

Office européen des brevets

# RAPPORT DE RECHERCHE EUROPEENNE

Numéro de la demande

EP 84 40 0807

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 285 915 (COMMONWEALTH SCIENTIFIC AND INDUSTRIAL RESEARCH ORGANIZATION)<br>--- | | G 21 C 19/30<br>C 22 B 26/10<br>C 22 B 9/02<br>C 22 B 3/00 |
| A | US-A-3 831 912 (S. SHIMOYASHIKI)<br>--- | | |
| A | US-A-3 179 503 (D.E. HORNER)<br>--- | | |
| A | US-A-3 059 030 (J.D. PARK)<br>--- | | |
| A | PATENTS ABSTRACTS OF JAPAN, vol. 4, no. 12 (C-71), 29 janvier 1980, page 54 C 71 & JP - A - 54 146 208 (MITSUBISHI KASEI KOGYO K.K.) (15-11-1979)<br>----- | | DOMAINES TECHNIQUES RECHERCHES (Int. Cl. 3)<br>C 22 B<br>G 21 C |

Le présent rapport de recherche a été établi pour toutes les revendications

| Lieu de la recherche | Date d'achèvement de la recherche | Examinateur |
|---|---|---|
| LA HAYE | 13-08-1984 | JACOBS J.J.E.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant